(19) **Europäisches Patentamt**

**European Patent Office**

**Office européen des brevets**

(11) **EP 0 496 619 B1**

(12) **EUROPEAN PATENT SPECIFICATION**

(45) Date of publication and mention of the grant of the patent:
**26.04.2000 Bulletin 2000/17**

(51) Int. Cl.⁷: **H04N 1/40**

(21) Application number: **92300587.0**

(22) Date of filing: **23.01.1992**

(54) **Image processing machine**

Bildverarbeitungsgerät

Appareil de traitement d'images

(84) Designated Contracting States:
**DE ES FR GB IT**

(30) Priority: **23.01.1991 JP 639491**
**28.01.1991 JP 850191**
**22.01.1992 EP 92300547**

(43) Date of publication of application:
**29.07.1992 Bulletin 1992/31**

(73) Proprietor:
**CANON KABUSHIKI KAISHA**
**Tokyo (JP)**

(72) Inventor:
**Ishida, Shinichi,**
**c/o Canon Kabushiki Kaisha**
**Tokyo (JP)**

(74) Representative:
**Beresford, Keith Denis Lewis et al**
**BERESFORD & Co.**
**High Holborn**
**2-5 Warwick Court**
**London WC1R 5DJ (GB)**

(56) References cited:
**EP-A- 0 194 689**     **EP-A- 0 392 781**
**EP-A- 0 404 236**     **GB-A- 2 170 372**
**US-A- 4 750 209**

- **PATENT ABSTRACTS OF JAPAN vol. 13, no. 333 (E-794)26 July 1989**
- **PATENT ABSTRACTS OF JAPAN vol. 12, no. 403 (E-674)26 October 1988**
- **PATENT ABSTRACTS OF JAPAN vol. 13, no. 333 (E-794)26 July 1989**
- **PATENT ABSTRACTS OF JAPAN vol. 12, no. 461 (E-689)5 December 1988**
- **PATENT ABSTRACTS OF JAPAN vol. 10, no. 325 (E-451)6 November 1986**
- **PATENT ABSTRACTS OF JAPAN vol. 14, no. 105 (E-895)26 February 1990**

## Description

### BACKGROUND OF THE INVENTION

#### Field of the Invention

The present invention relates to an image processing machine such as a digital copying machine or a facsimile machine, and more particularly to an image processing machine which processes data obtained by reading written or picture documents into binary data, i.e. two values corresponding respectively to black and white.

#### Description of the Related Art

Facsimile or digital copying machines are conventionally known which read image information from documents or pictures with image sensors such as CCDs and which quantize the obtained image information, for example, into binary data and which send the data to recording devices or other machines, collectively "receivers".

In such a conventional machine, such binary processing is performed by using a fixed threshold in the case of a letter document and by using a method, such as the error diffusion method, in which optical density of an original image is retained in the case of a photograph document with or without letters.

US-A-4969052 and US-A-4975786 and EP-A-0392781, all made by the present inventor, disclose machines which employ the error diffusion method to perform binary-processing.

In the case of a document having pictures with or without letters, such a conventional machine obtains smooth binary data which retain density of an original image because the binary processing is carried out by a density-retaining method such as the error diffusion method. However, in the case of a document of letters alone, the reproduced letters have rough or notched edge lines because the binary processing is done simply by using a fixed threshold.

EP-A-0392781 proposes to use a density correction circuit prior to converting image data to binary form by error diffusion. The correction circuit has different density conversion tables for use in different modes, such as a photograph mode and mixed character/photograph mode.

JP abstracts JP-A-61133772 and JP-A-01305772 describe circuits for detecting and correcting notches to improve the appearance of line images in binary data.

It is an object of the present invention to provide with simple circuitry an image processing machine which provides high-quality, smooth images in the case of a letter document as well as in the case of a photograph document with or without letters.

The invention provides an image processing apparatus as set out in claim 1.

The above mentioned and still other features and advantages of the present invention will become apparent from the attached drawings and the below detailed description of the preferred embodiments with reference to those drawings.

### BRIEF DESCRIPTION OF THE DRAWINGS

Fig 1 is a block diagram illustrating a facsimile machine.

Fig 2 illustrates binary images before and after notch-processing according to the embodiment of Figure 1.

Fig 3 shows one example of a table for conversion of luminance data to density data.

Fig 4 shows one example of an error diffusion matrix.

Fig 5 is an exterior view of an operating unit.

Fig 6 is a block diagram illustrating a facsimile machine according to a first embodiment of the present invention.

Fig 7 is a detailed block diagram of the error diffusion processing unit shown in Fig 1.

Fig 8 consisting of Figs 8(a), 8(b) and 8(c), illustrates the error diffusion process.

Fig 9 is a flowchart of the control process by a CPU according to the first embodiment of the present invention.

Fig 10 is a block diagram illustrating a facsimile machine according to a second embodiment of the present invention.

Fig 11 is a detailed block diagram of the error diffusion processing unit shown in Fig 10.

Fig 12 shows one example of an error diffusion matrix.

### DETAILED DESCRIPTION OF PREFERRED EMBODIMENTS

[The First Embodiment]

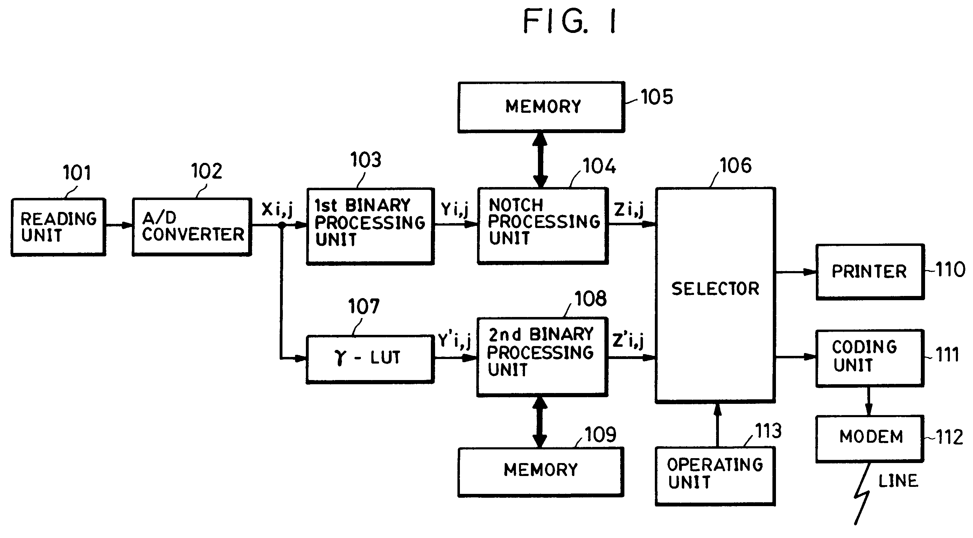

Fig. 1 shows a block diagram of a facsimile machine which reads image information from a document and quantizes the information into binary data and then outputs the binary data of an image to a printer or a coding unit.

In Fig. 1, a reading unit 101 includes a light source for illuminating a document surface, an image sensor for converting image information of the document into electric signals, and a driving means for conveying the document perpendicularly to the scanning direction.

An A/D converter 102 quantizes the analog signals obtained by the reading unit 101 into six-bit digital signals (number of bits, of course, is not critical). The quantized data are sent to a first binary-processing unit 103, which compresses the quantized data into two values, i.e. black and white, according to a fixed threshold TH. A signal $X_{i,j}$ from the A/D converter 102 is compressed by the binary-processing into an output datum $Y_{i,j}$ as follows:

$$X_{i,j} \geq TH \qquad Y_{i,j} = 0 \text{ (white)}$$

$$X_{i,j} < TH \qquad Y_{i,j} = 1 \text{ (black)}$$

The binary datum $Y_{i,j}$ is then sent to a notch-processing unit 104.

The above mentioned notch processing (smoothing out) is a technique for improving the quality of binary images. Binary letter images tend to have "notches", meaning recesses and projections which are not present in the original letters. Obviously, such notches result in low image quality. Further, in a machine, such as a facsimile machine, which compresses image data into binary data, notches cause a reduced compression ratio and require a long transmission time. In notch processing, such notches are detected and smoothed out.

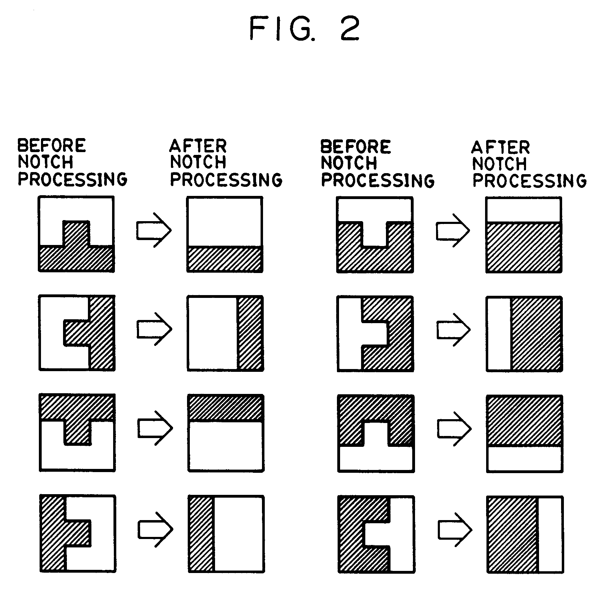

The notch processing will be described hereinafter. The binary image of the original image is compared with eight notch-patterns in 3 x 3 matrixes shown in Fig. 2, which are provided beforehand, and thus notches are detected.

A notch is detected when a recess or projection of the binary image coincides with one of the notch patterns. The detected notch is removed. When the pixel of the notch is black, the pixel is switched to white. When the pixel is white, it is switched to black.

In the notch processing, an object pixel is compared with the two lines of pixels at the front and rear of the object pixel. A memory 105 shown in Fig. 1 stores the binary data of such two lines of pixels.

A datum $Z_{i,j}$ processed by the notch processing for improving image quality is sent to a selector 106.

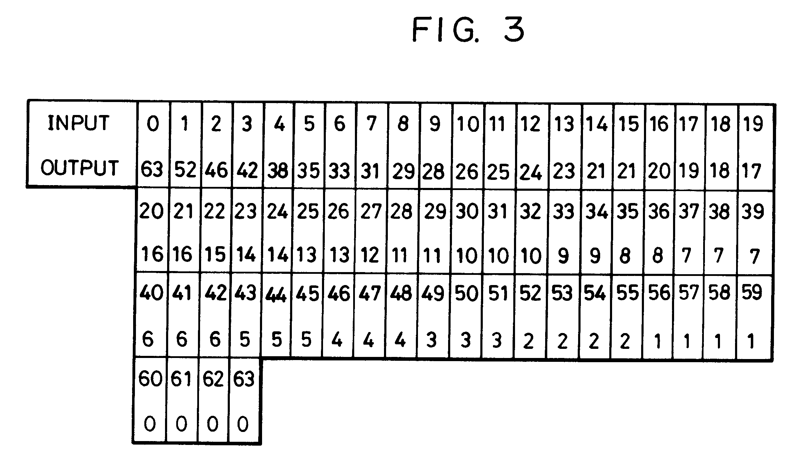

Six-bit data quantized by the A/D converter 102 are also sent to a $\gamma$-LUT (gamma look-up table) 107, which converts luminance data to density data according to a table an example of which is shown in Fig. 3.

Density data are compressed into black/white binary data by a binary-processing unit 108.

The binary-processing is performed by a method of density-retaining type, such as the error diffusion method, the average error least method and the average density retaining method.

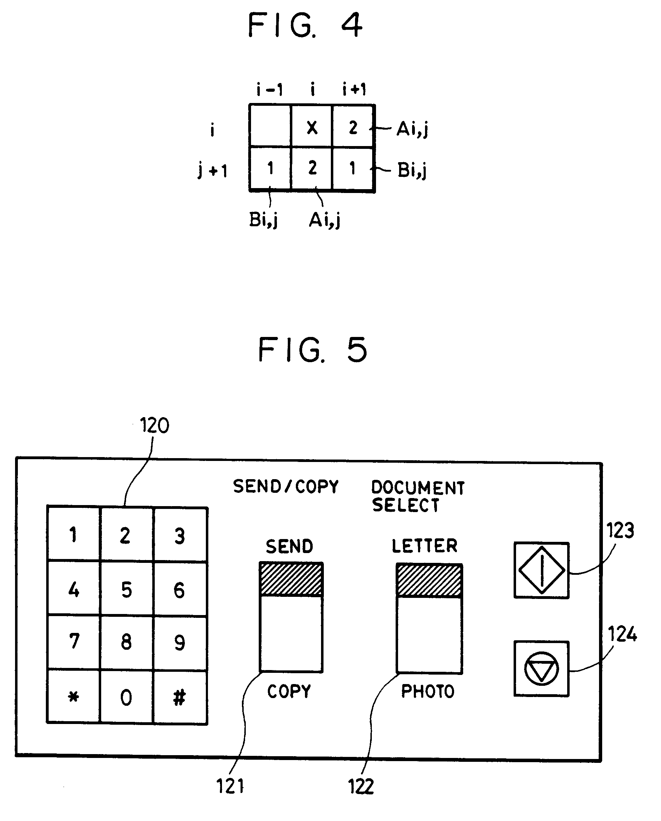

In the error diffusion method, an error which occurs during binary-processing of image data of a object pixel is diffused to the neighboring pixels by a weighting filter like that shown in Fig. 4 as the binary-processing is thus carried out one pixel after another. A memory 109 shown in Fig. 1 stores the errors which are diffused into the pixels in the next line. A binary datum $Z'_{i,j}$ processed by a second binary-processing unit 108 is sent to the selector 106.

The binary processing by the error diffusion method performed by the second binary-processing unit 108 will be described in detail later in the description of the second embodiment of the present invention.

The selector 106 selects the datum $Z_{i,j}$ when the letter mode is selected at an operating unit 113 and the datum $Z'_{i,j}$ when the photograph mode is selected thereat. Further, the selector 106 selects to send the selected datum $Z_{i,j}$ or $Z'_{i,j}$ to a printer 110 when the copy mode is selected at the operating unit 113 and to send the datum $Z_{i,j}$ or $Z'_{i,j}$ to a coding unit 111 when the send mode is selected thereat. The printer 106 may be of thermo-sensitive recording type, laser-beam type or ink-jet type. The coding unit 111 codes the binary data received from the selector 106 by a known coding method such as MH or NR (modified Huffman or modified Reed encoding used in standard facsimile encoding of the well known run length general type, known to the skilled man and described in, for example, the relevant CCITT Facsimile Encoding Standards) and then sends the coded data to a modem 112. The modem 112 modulates the coded data and sends out the modulated data to the line.

Referring to Fig. 5, the operating unit 113 has on its exterior: a ten key 120; a selecting key 121 for selecting send or copy mode; another selecting key 122 for selecting the letter-mode binary processing or photograph-mode binary processing; a start key 123; and a stop key 124.

According to the first embodiment

the notch processing is performed after the binary processing in the case of a letter document, and the error diffusion method is employed in the binary processing in the case of a photograph document with or without letters.

According to the first embodiment, the two memories 105 and 109 are provided for the notch processing and for the binary processing by the error diffusion method respectively. However, according to the first embodiment of the present invention, only one memory is provided for the above two kinds of processing. Such a memory is used selectively for either notch processing or binary processing.

If two memories are separately provided for the notch processing and the binary processing (error diffusion processing in this case), the memories take up a large portion of the base board, and costs also rise. If the two memories are simply combined into one in order to solve the above problems, it is necessary that such a memory have 1728 (the number of pixels on one scanning line) x 9 bits, i.e. the total of 1728 x 2 bits required for the notch processing and 1728 x 7 bits required for the error diffusion processing (since with six-bit data errors range from -63 to 63).

A memory capable of storing nine bits is substantially expensive compared with an eight-bit memory. Therefore, according to the second embodiment, one eight-bit memory is used selectively for either notch-processing or error diffusion processing.

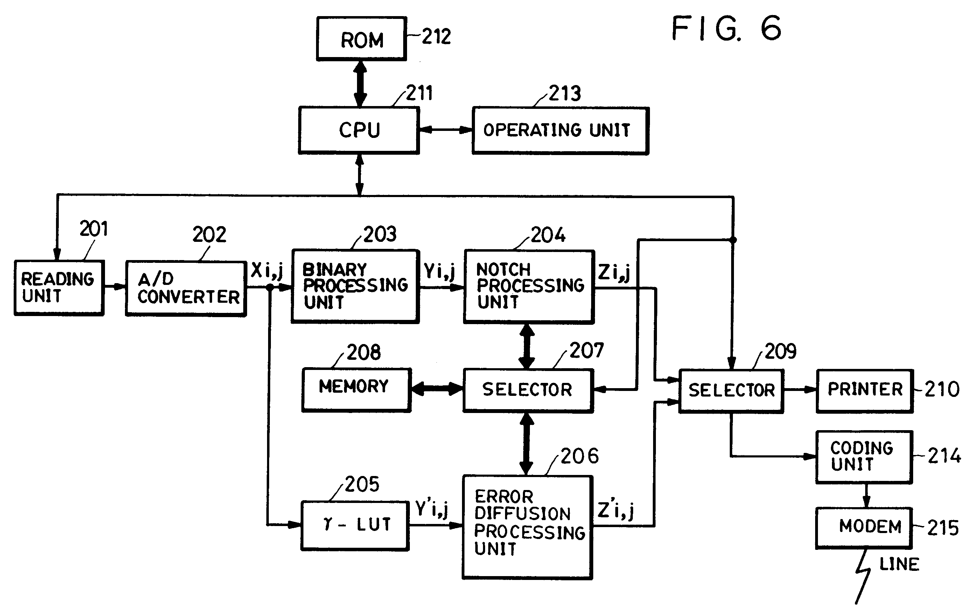

With reference to Fig. 6, which shows a block diagram of a facsimile machine according to the first embodiment of the present invention, a reading unit 201 includes a photoelectric transfer element, such as a CCD, and a driving means for driving this element. The reading unit 201 scans and reads a document.

An A/D converter 202 quantizes image data read by the reading unit 201 into six-bit digital signals. Sixty-four graduations are provided in which the least luminance datum 000000 means the darkest black and the greatest luminance datum 111111 means the lightest white.

A CPU 211 controls the whole system of the facsimile machine. A read only memory (ROM) 212 stores the controlling program of the CPU 211.

An operating unit 213, the same as the unit shown in Fig. 5, is for operating the facsimile machine.

A signal $X_{i,j}$ quantized by the A/D converter 202 is sent to a binary-processing unit 203. The binary-processing unit 203 compresses the six-bit datum $X_{i,j}$ received from the A/D converter 202 into a black/white binary datum by using a fixed threshold TH. The signal $X_{i,j}$ is compressed into a binary output signal $Y_{i,j}$ as follows:

$$X_{i,j} \geq TH \qquad Y_{i,j} = 0 \text{ (white)}$$

$$X_{i,j} < TH \qquad Y_{i,j} = 1 \text{ (black)}$$

The binary datum $Y_{i,j}$ is sent to a notch-processing unit 204.

The notch-processing unit 204 is provided beforehand with eight notch patterns in 3 x 3 matrices shown in Fig. 2. The binary image of the original image is compared with the notch patterns, and thus notches are detected. When the pixel of the detected notch is black, the pixel is switched to white. When the pixel is white, it is switched to black. In the notch processing, reference is made to three lines of pixels: one line including a object pixel; and two lines on both sides of the object pixel line. Therefore, binary data of two lines of pixels must be stored.

A memory 208 stores such data. The memory data length is eight bits. Although two bits for the notch processing and seven bits for the error diffusion processing are required, only one processing of the two is performed at a time. Thus, such a memory having eight-bit data length can be employed if it is used selectively for either notch processing or error diffusion processing. According to selection with a document key 122 in the operating unit 213 shown in Fig. 5, the CPU 211 sends a control signal to a selector 207 which, according to the control signal, switches data transference to the memory 208. An output datum $Z_{i,j}$ from the notch-processing unit 204 is sent to a selector 209.

Luminance data from the A/D converter 202 are also sent to a γ-LUT 205, i.e. a table for conversion of luminance data to density data. This table is composed of a six-bit ROM. A luminance datum $X_{i,j}$ from the A/D converter 202 is input to addresses A0 through A5, and then a density datum $Y'_{i,j}$ is output at output terminals D0 through D5 of the ROM. The density datum $Y'_{i,j}$ is sent to an error diffusion processing unit 206. The γ-LUT is shown in Fig. 3.

When the binary processing by the error diffusion processing unit 206 is selected, i.e. when the photograph mode is selected with the document key 122 in the operating unit 213, the CPU 211 sends the selector 207 a command that error data from the error diffusion processing unit 206 be stored in the memory 208.

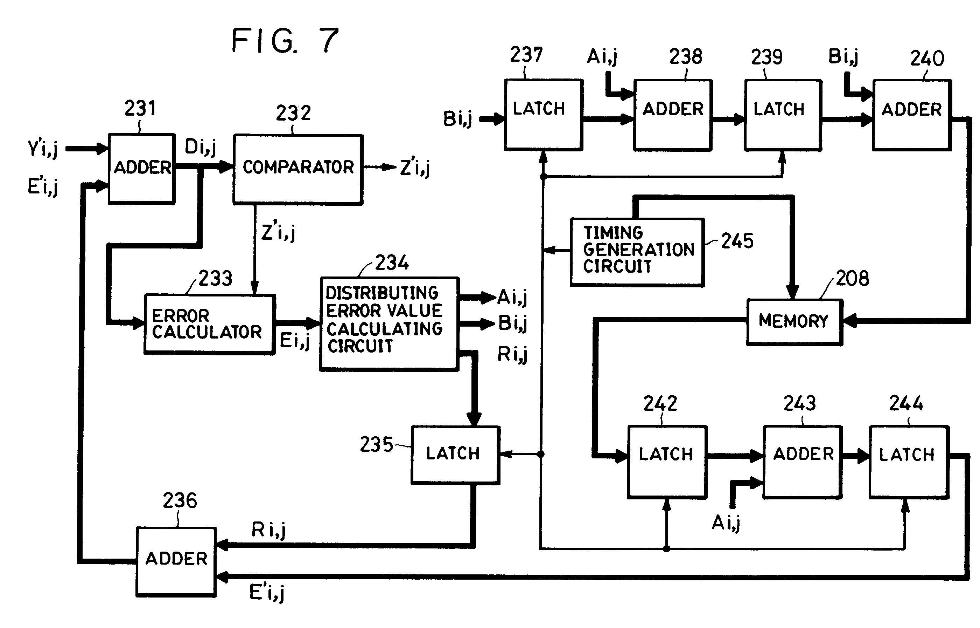

With reference to Fig. 7, the error diffusion processing unit 206 shown in Fig. 6 will be described in detail.

An adder 231 adds the density datum $Y'_{i,j}$ received from the γ-LUT 205 to an error datum $E'_{i,j}$, received from another adder 236, which has previously occurred during the binary processing.

A datum $D_{i,j}$ compensated by the adder 231 is expressed as:

$$D_{i,j} = Y'_{i,j} + E'_{i,j}$$

A comparator 232 processes the datum $D_{i,j}$ into a binary output datum $Z'_{i,j}$ by using a threshold T (T = 32) as:

$$Di_{i,j} \geq T \qquad Z'_{i,j} = 63$$

$$D_{i,j} < T \qquad Z'_{i,j} = 0$$

The datum $D_{i,j}$ is also sent to an error calculating unit 233. The error calculating unit 233 calculates an error $E_{i,j}$ from the datum $D_{i,j}$ and the binary output datum $Z'_{i,j}$ as:

$$E_{i,j} = D_{i,j} - Z'_{i,j}$$

The error $E_{i,j}$ is sent to a distributing error value calculating circuit 234, which calculates from the error $E_{i,j}$ error values $A_{i,j}$, $B_{i,j}$ and $R_{i,j}$ which are then distributed to four pixels surrounding a current object pixel.

A weight matrix illustrated in Fig. 4 shows to which pixels and in what ratio the error $E_{i,j}$ in an object pixel X is distributed. The distributing error value calculating circuit 234 determines values $A_{i,j}$ and $B_{i,j}$ shown in Fig. 4 as:

$$A_{i,j} = 2 \times I_{nt}(E_{i,j} \times 1/6)$$

$$B_{i,j} = I_{nt}(E_{i,j} \times 1/6)$$

where $I_{nt}$ functions to discard the figures to the right of the decimal point.

The distributing error value calculating circuit 234 discards the figures to the right of the decimal point. In other words, it outputs integers only. Because the figures to the right of the decimal point are discarded, there is a remainder $R_{i,j}$ between the error in an object pixel and the total of the values $A_{i,j}$, $B_{i,j}$ which the distributing error value calculating circuit 234 calculates to distribute to four surrounding pixels. Such a remainder $R_{i,j}$ is expressed as:

$$R_{i,j} = E_{i,j} - 2 \times (A_{i,j} + B_{i,j})$$

The remainder $R_{i,j}$ is sent to a latch 235, where the remainder $R_{i,j}$ is retained to be added to the input datum $Y'_{i+1,j}$ of the next object pixel.

The value $A_{i,j}$ is sent to adders 243 and 238 in order to be distributed to pixels (i, j+1) and (i+1, j) respectively. The value $B_{i,j}$ is sent to a latch 237 and an adder 240 in order to be distributed to pixels (i+1, j+1) and (i-1, j+1) respectively.

The memory 208 has capacity for storing error data from one line of pixels and stores error values which are distributed to pixels on line j+1.

A timing generation circuit 245 generates various signals such as latch signals for latches 235, 237, 239, 242 and 244 and address signals for the memory 208.

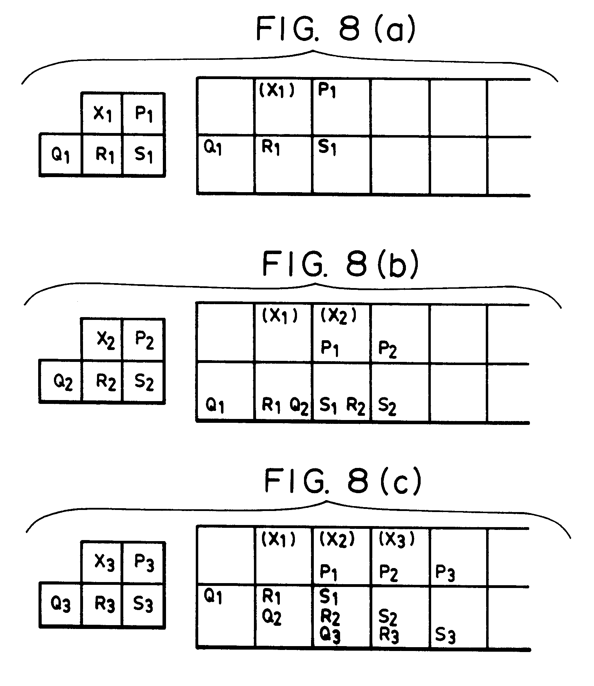

The above-described error distribution will be further described in detail with reference to Fig. 8, which illustrates flows of the binary processing by the error diffusion method. Weighted error values $P_1$, $Q_1$, $R_1$ and $S_1$ of the error which occurs in an object pixel $X_1$ are sent to four surrounding pixels as shown in Fig. 8(a). The value $P_1$ is sent to the adder 243 shown in Fig. 7; the value $Q_1$ to the adder 240; the value $R_1$ to the adder 238; and the value $S_1$ to the latch 237. The value $Q_1$ is written into the first address of the memory 208.

When the object pixel shifts to the pixel $X_2$, error values $P_2$, $Q_2$, $R_2$ and $S_2$ are distributed to surrounding pixels as shown in Fig. 8(b). The value $P_2$ is sent to the adder 243. The value $Q_2$ is added to the value $R_1$ from the previous object pixel $X_1$ by the adder 240, and the total value $Q_2+R_1$ is written into the second address of the memory 208. The value $R_2$ is added to the value $S_1$ from the pixel $X_1$ by the adder 238. The

value $S_2$ is sent to the latch 237.

When the object pixel shifts to the pixel $X_3$, error values $P_3$, $Q_3$, $R_3$ and $S_3$ are distributed to surrounding pixels as shown in Fig. 8(c). The value $P_3$ is sent to the adder 243. The value $Q_3$, the value $S_1$ from the pixel $X_1$ and the value $R_2$ from the pixel $X_2$ are added by the adder 240, and the total value is written into the third address of the memory 208. The value $R_3$ and the value $S_2$ from the pixel $X_2$ are added by the adder 238. The value $S_3$ is sent to the latch 237.

When such processing is completed with all the pixels on this line, the memory 208 stores values as follows:

1st address --- $M_1 = Q_1$
2nd address --- $M_2 = R_1 + Q_2$
3rd address --- $M_3 = S_1 + R_2 + Q_3$
4th address --- $M_4 = S_2 + R_3 + Q_4$
ith address --- $M_i = S_{i-2} + R_{i-1} + Q_i$

When the processing is performed on the next line of pixels, the error values distributed from the pixels of the previous line are read out from the memory 208. The error value read out for an object pixel is added to an error value distributed from the previous object pixel by the adder 243, and the total value is output from the latch 244 Reading out errors from the memory 208 is controlled by a timing generation circuit 235 so that error values from the pixels of the previous line corresponding to a current object pixel will be read out, i.e. an address $M_{i-3}$ of the memory 208 will be read out for an object pixel $X_i$.

By performing such processing on every input datum, the binary processing by the error diffusion method is carried out.

The error diffusion processing is performed only in the photo-document mode. When the photograph mode is selected with the document-select key of the operating unit 213, the selector 207 selects seven-bit error data E0 to E6 from the error diffusion processing unit 206 and sends the error data to the memory 208.

Binary data $Z_{i,j}$ and $Z'_{i,j}$ respectively processed by the notch-processing unit 204 and the error diffusion processing unit 206 are sent to a selector 209. The selector 209 selects one of the binary data $Z_{i,j}$ and $Z'_{i,j}$ according to the position of the document-select key 122 of the operating unit 213, i.e. according to the selected document mode. The selector 209 selects a datum $Z_{i,j}$ in the letter mode and a datum $Z'_{i,j}$ in the photograph mode. Then, the selector 209 sends the selected datum $Z_{i,j}$ or $Z'_{i,j}$ to a coding unit 214 or a printer 210 according to the position of the send/copy key 121 of the operating unit 213. The data coded by the coding unit 214 are modulated by a modem 215 and then sent out to the line.

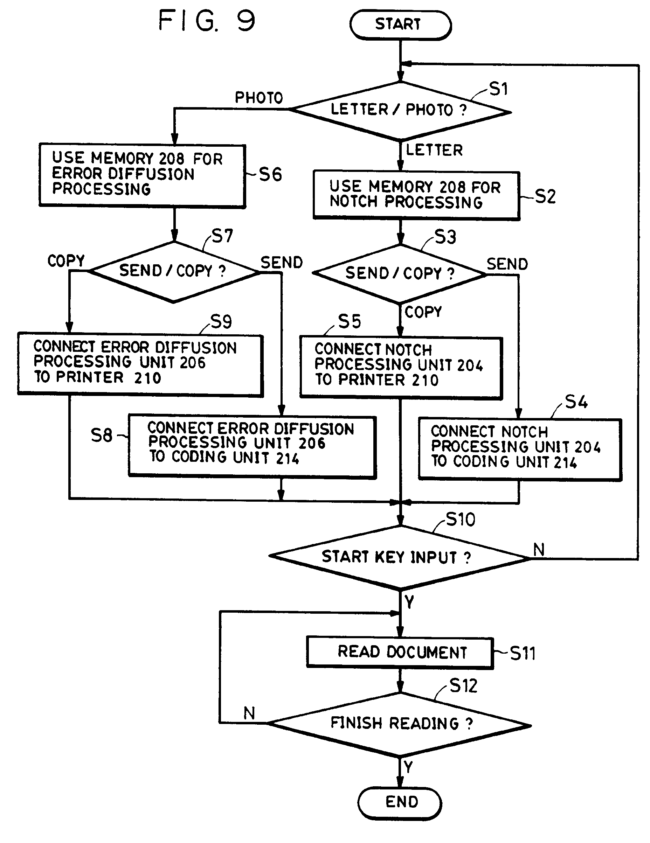

Fig. 9 shows a flowchart of a control process carried out by the CPU 211. The CPU 211 sends signals to the selectors 207 and 209 according to the positions of the send/copy key 121 and the document-select key 122 of the operating unit 213.

With reference to Fig.9, the position of the document-select key 122 is distinguished at a step S1. It is followed by a step S2 when the letter mode is selected, and is followed by a step S6 when the photograph mode is selected. At the step S2, a control signal is sent to the selector 207 so that the memory 208 will be used for the notch processing of the notch-processing unit 204. At a step S3, the position of the send/copy key 121 is distinguished. It is followed by a step S4 when the send mode is selected, and by a step S5 when the copy mode is selected. At the step S4, the selector 209 is set so as to send the binary data processed by the notch processing of the notch-processing unit 204 to the coding unit 214. At the step S5, the selector 209 is set so as to send the binary data processed by the notch processing of the notch-processing unit 204 to the printer 210.

At the step S6, the selector 207 is set so that the memory 208 will be used for the error diffusion processing of the error diffusion processing unit 206. At the next step S7, the position of the send/copy key 121 is distinguished. The process proceeds to a step S8 when the send mode is selected, and to a step S9 when the copy mode is selected. At the step S8, the selector 209 is set so as to send the coding unit 214 the binary data processed by the binary processing of the error diffusion processing unit 206. At the step S9, the selector 209 is set so as to send the printer 210 the binary data processed by the binary processing of the error diffusion processing unit 206.

At a step S10, it is checked whether a start key 123 is pressed or not. If it is pressed, the process goes to a step S11. When it is not pressed, the process goes back to the step S1. At the step S11, a command for reading a document is sent to the reading unit 201.

At a step S12, it is checked whether reading of the document is finished or not. When it is finished, the process comes to an end.

As described above, the eight-bit memory is used for the error diffusion processing in the photograph mode, and for the notch processing in the letter mode. Therefore, according to the second embodiment, the number of bits used in the memory can be reduced, and thus high-quality images can be obtained without raising costs or enlarging the circuit size.

[The Second Embodiment]

According to the second embodiment, seven-bit error data which occur during the error diffusion processing are processed into six-bit data, and thus two bits of the eight-bit memory can be used for the notch processing.

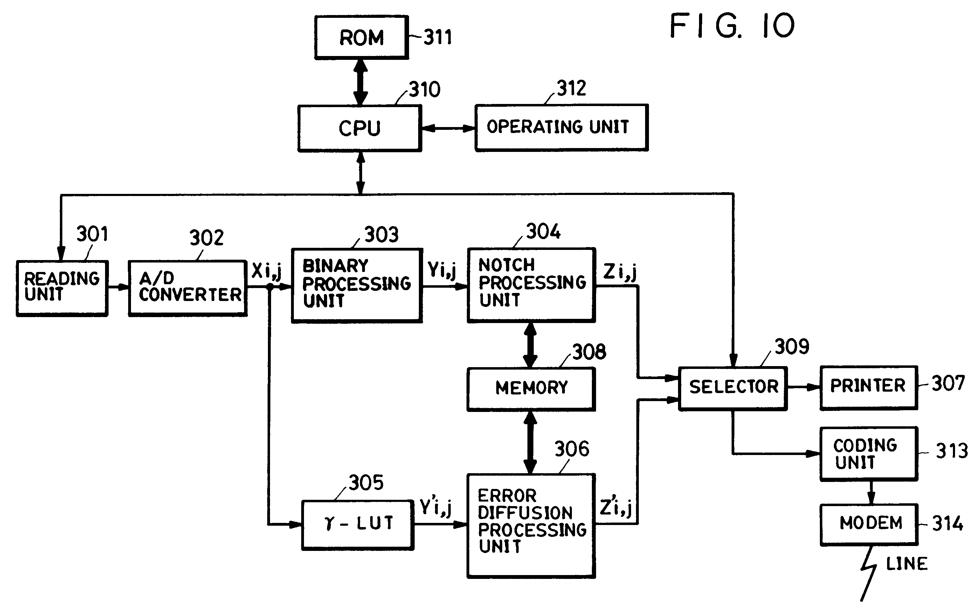

Fig. 10 shows a block diagram of a facsimile machine according to the second embodiment. With reference to Fig. 10, a reading unit 301 includes a photoelectric transfer element, such as a CCD, and a driving means for driving this element. The reading unit 201 scans and reads a document.

An A/D converter 302 quantizes image data read by the reading unit 301 into six-bit digital signals. Sixty-four graduations are provided in which the least luminance datum 000000 means the darkest black and the greatest luminance datum 111111 means white. A CPU 310 controls the whole system of the facsimile machine. A read only memory (ROM) 311 stores the controlling program of the CPU 310.

An operating unit 312, the same as the unit shown in Fig. 5, is for operating the facsimile machine.

A signal $X_{i,j}$ quantized by the A/D converter 302 is sent to a binary-processing unit 303. The binary-processing unit 303 compresses the six-bit datum $X_{i,j}$ received from the A/D converter 302 into a black/white binary datum by using a fixed threshold TH. The signal $X_{i,j}$ is compressed into a binary output signal $Y_{i,j}$ as follows:

$$X_{i,j} \geq TH \qquad Y_{i,j} = 0 \text{ (white)}$$

$$X_{i,j} < TH \qquad Y_{i,j} = 1 \text{ (black)}$$

The binary datum $Y_{i,j}$ is sent to a notch-processing unit 304.

The notch-processing unit 304 is provided beforehand with eight notch patterns in 3 x 3 matrices shown in Fig. 2. The binary image of the original image is compared with the notch patterns, and thus notches are detected. When the pixel of the detected notch is black, the pixel is switched to white. When the pixel is white, it is switched to black. In the notch processing, reference is made to three lines of pixels: one line including a object pixel; and two lines on both sides of the object pixel line. Therefore, binary data of two lines of pixels must be stored.

The data length of a memory 308 is eight bits, and two bits of them are allotted to the notch processing.

Luminance data from the A/D converter 302 are also sent to a γ-LUT 305, i.e. a table for conversion of luminance data to density data. This table is composed of a six-bit ROM. A luminance datum $X_{i,j}$ from the A/D converter 202 is input to addresses A0 - A5, and then a density datum $Y'_{i,j}$ is output at output terminals D0 - D5 of the ROM. The density datum $Y'_{i,j}$ is sent to an error diffusion processing unit 306. The γ-LUT is like that shown in Fig. 3.

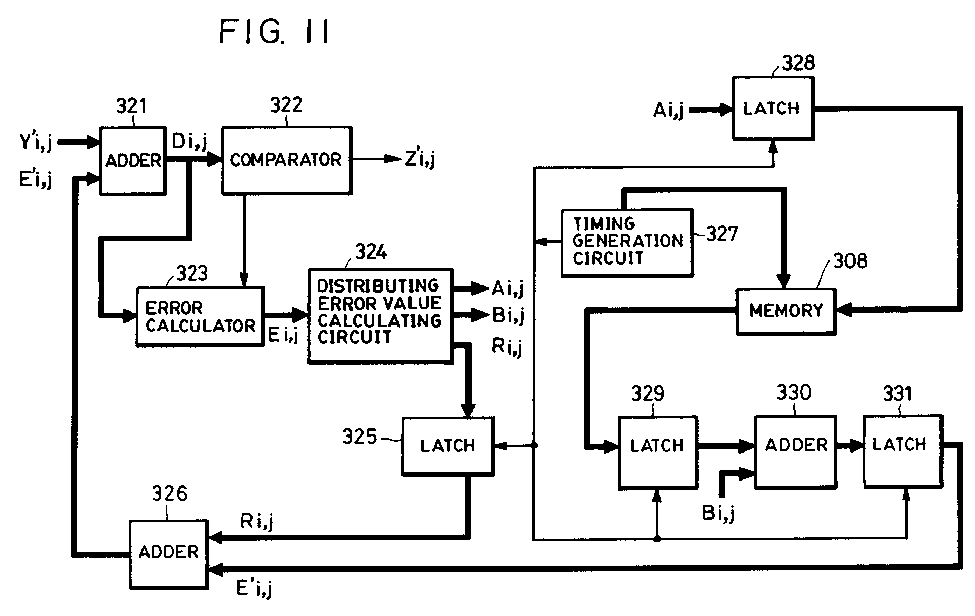

With reference to Fig. 11, the error diffusion processing unit 306 shown in Fig. 10 will be described in detail.

An adder 321 adds the density datum $Y'_{i,j}$ received from the γ-LUT 305 to an error datum $E_{i,j}$, received from another adder 326, which has previously occurred during the binary-processing.

A datum $D_{i,j}$ compensated by the adder 321 is expressed as:

$$D_{i,j} = Y'_{i,j} + E'_{i,j}$$

A comparator 322 processes the datum $D_{i,j}$ into a binary output datum $Z'_{i,j}$ by using a threshold T (T = 32) as:

$$D_{i,j} \geq T \qquad Z'_{i,j} = 63$$

$$D_{i,j} < T \qquad Z'_{i,j} = 0$$

The datum $D_{i,j}$ is also sent to an error calculating unit 323. The error calculating unit 323 calculates an error $E_{i,j}$ from the datum $D_{i,j}$ and the binary output datum $Z'_{i,j}$ as:

$$E_{i,j} = D_{i,j} - Z'_{i,j}$$

The error $E_{i,j}$ is sent to a distributing error value calculating circuit 324, which calculates from the error $E_{i,j}$ error values which are then distributed to two pixels next to a current object pixel.

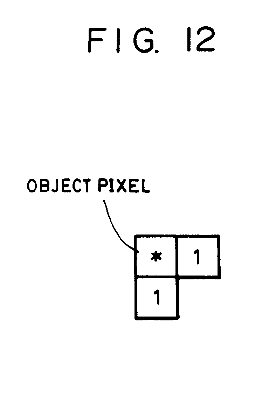

A weight matrix illustrated in Fig. 12 shows to which pixels and in what ratio the error $E_{i,j}$ in an object pixel $X_{i,j}$ is distributed. The distributing error value calculating circuit 324 determines values $A_{i,j}$ and $B_{i,j}$ shown in Fig. 12 as:

$$A'_{i,j} = I_{nt}(E_{i,j} \times 1/2)$$

$$B'_{i,j} = I_{nt}(E_{i,j} \times 1/2)$$

where $I_{nt}$ functions to discard the figures to the right of the decimal point. The distributing error value calculating circuit 324 discards the figures to the right of the decimal point. In other words, it outputs integers only.

Although six bits of the memory 308 are allotted for the error diffusion processing, seven bits (-63 to +63) are required for expressing a normal value $A_{i,j}$. Thereforer at the distributing error value calculating circuit 324, a value $A_{i,j}$ which is to be input to the memory 308 is compressed into a six-bit datum, and a value discarded from the value $A_{i,j}$ in such a compression process is added to a value $B_{i,j}$, as follows:

$$\text{when } -32 < A'_{i,j} \leq 31, \qquad (1)$$

$$A_{i,j} = A'_{i,j}, \ B_{i,j} = B'_{i,j} + R_{i,j}$$

$$\text{when } A'_{i,j} \geq 32, \qquad (2)$$

$$A_{i,j} = 31 , \ B_{i,j} = B'_{i,j} + (A'_{i,j} - 31) + R_{i,j}$$

$$\text{when } A'_{i,j} \leq -32, \qquad (3)$$

$$A_{i,j} = -31 , \ B_{i,j} = B'_{i,j} + (A'_{i,j} - (-31)) + R_{i,j}$$

where $R_{i,j}$ is the remainder occurring between the values $A_{i,j}$ and $B_{i,j}$ which are sent to the neighboring two pixels. The remainder $R_{i,j}$ is expressed as:

$$R_{i,j} = E_{i,j} - (A'_{i,j} + B'_{i,j})$$

The remainder $R_{i,j}$ is sent to a latch 325, where it is retained for adding to the input datum $Y'_{i+1,j}$ of the next object pixel.

The value $A_{i,j}$ is sent to a latch 328, where the value $A_{i,j}$ is retained for storing in the memory 308. The memory 308 stores error values which are to be distributed to pixels of the next line (j+1).

A timing generation circuit 327 generates various signals such as latch signals for latch circuits 328, 329 and 331 and address signals for the memory 308.

The CPU 310 sets a selector 309 according to the position of the document-select key of the operating unit 312. Since the memory has bits dedicated for the error diffusion processing and the notch processing according to this embodiment, the flow chart of a control process of the CPU will be made omitting the steps S2, S6 from the flowchart shown in Fig. 9.

Thus, according to the third embodiment, an error datum to be stored in the memory for the error diffusion processing is compressed into six-bit data, and the other error datum is put onto the next pixel aligned in the scanning direction. As a result, the higher two bits of the eight-bit memory remain available for other processing such as the notch processing.

Therefore, the number of bits used in a memory can be kept small.

As understood from the above description, according to the present invention, smooth, high-quality binary images can be obtained in the case of letter documents as well as in the case of photograph documents with or without letters, with simplified operation circuits.

**Claims**

1. An image processing apparatus comprising:

   inputting means (201) for receiving image data;
   first image processing means (203) for processing the image data provided by said inputting means into binary data by using a predetermined threshold;
   second image processing means (206) for processing the image data provided by said inputting means into binary data by using binary processing in which an error between input image data and the binary data is compensated for; and
   selecting means (207) for selecting either output from said first image processing means or output from said second image processing means,

characterised in that

said first image processing means further comprises smoothing means (204) for smoothing out the binary data, and

said apparatus further comprises a memory (208) which is common to said smoothing means (204) and said second image processing means (206) and which is used selectively by said smoothing means or said second image processing means, and wherein when said smoothing means uses the memory the binary data is stored in the memory and used to determine whether or not the binarised image corresponds to a pattern to be processed by smoothing processing or not, and wherein when the second image processing means uses the memory differences between said input data and said binary data are stored in the memory and are distributed to surrounding pixels.

2. Apparatus according to claim 1, further comprising recording means (210) for recording an image based on the output selected by said selecting means.

3. Apparatus according to claim 1 or 2, further comprising coding means (214) for coding the output selected by said selecting means, and sending means (215) for sending out the data coded by said coding means.

4. Apparatus according to any preceding claim , further comprising manual selecting means (213) for manually selecting either binary processing and smoothing processing by said first image processing means or binary processing by said second image processing means.

5. Apparatus according to any preceding claim, wherein said smoothing means (204) smooths out binary data by removing notches from an image represented by the binary data.

6. Apparatus according to any preceding claim, wherein said second image processing means (206) includes a conversion table (205) for converting luminance data provided by said reading means to density data, and wherein said second image processing means processes the density data from said conversion table into binary data by using a fixed threshold and compensates for errors occurring during the binary processing.

7. Apparatus according to any preceding claim, wherein said memory is arranged to store binary data for two lines of pixels for use by the first processing means and is arranged to store multi-bit error data for one line of pixels for use by the second processing means.

8. Apparatus according to claim 7, wherein bit positions occupied by said binary data for the first processing means within each pixel location of said memory are separate from those occupied by the multi-bit error data of the second processing means.

9. Apparatus according to any preceding claim, wherein said memory is capable of storing an eight-bit datum for one pixel.

10. Apparatus according to any preceding claim, wherein said second processing means comprises:

calculating means (233) for calculating errors between said input image data and said output image data;

weighting means (234) for weighting errors calculated by said calculating means, in a predetermined manner; and

compensating means (231) for compensating for the errors, by distributing an error weighted by said weighting means to surrounding pixels of the object pixel.

**Patentansprüche**

1. Bildverarbeitungsgerät mit:

einer Eingabeeinrichtung (201) zum Empfang von Bilddaten;

einer ersten Bildverarbeitungseinrichtung (203) zur Verarbeitung der seitens der Eingabeeinrichtung bereitgestellten Bilddaten in binäre Daten unter Verwendung einer vorbestimmten Schwelle;

einer zweiten Bildverarbeitungseinrichtung (206) zur Verarbeitung der seitens der Eingabeeinrichtung bereitgestellten Bilddaten in binäre Daten unter Verwendung einer binären Verarbeitung, bei der ein Fehler zwischen eingegebenen Bilddaten und den binären Daten kompensiert wird, und

einer Auswahleinrichtung (207) zur Auswahl entweder der Ausgabe der ersten Bildverarbeitungseinrichtung oder der Ausgabe der zweiten Bildverarbeitungseinrichtung;

**dadurch gekennzeichnet, daß**

die erste Bildverarbeitungseinrichtung zudem eine Glättungseinrichtung (204) zum Glätten der binären Daten aufweist, und

das Gerät zudem einen Speicher (208) aufweist, der für die Glättungseinrichtung (204) und die zweite Bildverarbeitungseinrichtung (206) gemeinsam vorgesehen ist und der wahlweise seitens der Glättungseinrichtung oder der zweiten Bildverarbeitungseinrichtung verwendet wird, und bei dem, wenn die Glättungseinrichtung den Speicher verwendet, die binären Daten in dem Speicher gespeichert werden und zur Bestimmung verwendet werden, ob das binärisierte Bild einem durch Glättung zu verarbeitenden Muster entspricht oder nicht, und bei dem, wenn die zweite Bildverarbeitungseinrichtung den Speicher verwendet, Differenzen zwischen den eingegebenen Daten und den binären Daten in dem Speicher gespeichert werden und auf umgebende Bildelemente verteilt werden.

2. Gerät nach Anspruch 1, ferner mit einer Aufzeichnungseinrichtung (210) zum Aufzeichnen eine Bildes beruhend auf der durch die Auswahleinrichtung ausgewählten Ausgabe.

3. Gerät nach Anspruch 1 oder 2, ferner mit einer Kodiereinrichtung (214) zur Kodierung der durch die Auswahleinrichtung ausgewählten Ausgabe, und einer Sendeeinrichtung (215) zum Aussenden der durch die Kodiereinrichtung kodierten Daten.

4. Gerät nach einem der vorhergehenden Ansprüche, ferner mit einer manuellen Auswahleinrichtung (213) zur manuellen Auswahl entweder der binären Verarbeitung und Glättungsverarbeitung durch die erste Bildverarbeitungseinrichtung oder der binären Verarbeitung durch die zweite Bildverarbeitungseinrichtung.

5. Gerät nach einem der vorhergehenden Ansprüche, bei dem die Glättungseinrichtung (204) binäre Daten glättet, indem Unstetigkeiten aus einem durch die binären Daten dargestellten Bild entfernt werden.

6. Gerät nach einem der vorhergehenden Ansprüche, bei dem die zweite Bildverarbeitungseinrichtung (206) eine Wandlungstabelle (205) zur Wandlung von seitens der Leseeinrichtung bereitgestellten Luminanzdaten in Dichtedaten enthält, und bei dem die zweite Bildverarbeitungseinrichtung die Dichtedaten aus der Wandlungstabelle unter Verwendung einer festen Schwelle in binäre Daten umwandelt und während der binären Verarbeitung auftretende Fehler kompensiert.

7. Gerät nach einem der vorhergehenden Ansprüche, bei dem der Speicher angeordnet ist, um binäre Daten von zwei Zeilen von Bildelementen zur Verwendung durch die erste Verarbeitungseinrichtung zu speichern, und angeordnet ist, um Mehrfach-Bit Fehlerdaten für eine Zeile von Bildelementen zur Verwendung durch die zweite Verarbeitungseinrichtung zu speichern.

8. Gerät nach Anspruch 7, wobei die durch die binären Daten für die erste Verarbeitungseinrichtung innerhalb jeder Bildelementspeicherstelle des Speichers belegten Bitpositionen von jenen durch die Mehrfach-Bit Fehlerdaten der zweiten Verarbeitungseinrichtung belegten getrennt sind.

9. Gerät nach einem der vorhergehenden Ansprüche, wobei es dem Speicher möglich ist, einen aus acht Bit bestehenden Dateneintrag für ein Bildelement zu speichern.

10. Gerät nach einem der vorhergehenden Ansprüche, wobei die zweite Verarbeitungseinrichtung:

eine Berechnungseinrichtung (223) zur Berechnung von Fehlern zwischen den eingegebenen Bilddaten und den ausgegebenen Bilddaten;
eine Wichtungseinrichtung (234) zur Wichtung von seitens der Berechnungseinrichtung berechneten Fehler auf eine vorbestimmte Weise; und
eine Kompensationseinrichtung (231) zur Kompensation der Fehler durch Verteilung eines durch die Wichtungseinrichtung gewichteten Fehlers auf das betreffende Bildelement umgebende Bildelemente aufweist.

## Revendications

1. Appareil de traitement d'image, comprenant :

un moyen (201) d'entrée pour recevoir des données d'image ;
un premier moyen (203) de traitement d'image pour traiter les données d'image fournies par ledit moyen d'entrée en données binaires en utilisant un seuil prédéterminé ;
un deuxième moyen (206) de traitement d'image pour traiter les données d'image fournies par ledit moyen d'entrée en données binaires en utilisant un traitement binaire dans lequel une erreur entre des données d'image d'entrée et les données binaires, est compensée ; et
un moyen (207) de sélection pour sélectionner, soit la sortie dudit premier moyen de traitement d'image, soit la sortie dudit deuxième moyen de traitement d'image, caractérisé en ce que

ledit premier moyen de traitement d'image comprend en outre un moyen (204) de lissage pour lisser les données binaires, et
ledit appareil comprend en outre une mémoire (208) qui est commune audit moyen (204) de lissage et audit deuxième moyen (206) de traitement d'image et qui est utilisée sélectivement par ledit moyen de lissage ou ledit deuxième moyen de traitemnt d'image, et dans lequel, lorsque ledit moyen de lissage utilise la mémoire, les données binaires sont stockées dans la mémoire et sont utilisées pour déterminer si l'image mise sous forme binaire correspond ou non à une configuration à traiter ou non par un traitement de lissage, et dans lequel, lorsque le deuxième moyen de traitement d'image utilise la mémoire, des différences entre lesdites données d'entrée et lesdites données binaires sont stockées dans la mémoire et sont réparties sur les pixels voisins.

2. Appareil selon la revendication 1, comprenant en outre un moyen (210) d'enregistrement pour enregistrer une image sur la base de la sortie sélectionnée par ledit moyen de sélection.

3. Appareil selon la revendication 1 ou 2, comprenant en outre un moyen (214) de codage pour coder la sortie sélectionnée par ledit moyen de sélection, et un moyen (215) d'envoi pour envoyer les données codées par ledit moyen de codage.

4. Appareil selon l'une quelconque des revendications précédentes, comprenant en outre un moyen (213) de sélection manuelle pour sélectionner manuellement, soit un traitement binaire et un traitement de lissage par ledit premier moyen de traitement d'image, soit un traitement binaire par ledit deuxième moyen de traitement d'image.

5. Appareil selon l'une quelconque des revendications précédentes, dans lequel ledit moyen (204) de lissage lisse des données binaires par suppression de dentelures d'une image représentée par les données binaires.

6. Appareil selon l'une quelconque des revendications précédentes, dans lequel ledit deuxième moyen (206) de traitement d'image comporte une table de conversion (205) pour convertir des données de luminance fournies par ledit moyen de lecture en données de densité, et dans lequel ledit deuxième moyen de traitement d'image traite les données de densité en provenance de ladite table de conversion en données binaires en utilisant un seuil fixe, et compense des erreurs qui se produisent au cours du traitement binaire.

7. Appareil selon l'une quelconque des revendications précédentes, dans lequel ladite mémoire est agencée pour stocker des données binaires pour deux lignes de pixels pour une utilisation par le premier moyen de traitement et est agencée pour stocker des données d'erreur à bits multiples pour une ligne de pixels pour une utilisation par le deuxième moyen de traitement.

8. Appareil selon la revendication 7, dans lequel des positions de bits occupées par lesdites données binaires pour le premier moyen de traitement dans chaque emplacement de pixel de ladite mémoire, sont séparées de celles occupées par les données d'erreur à bits multiples du deuxième moyen de traitement.

9. Appareil selon l'une quelconque des revendications précédentes, dans lequel ladite mémoire est capable de stocker une donnée à huit bits pour un pixel.

10. Appareil selon l'une quelconque des revendications précédentes, dans lequel ledit deuxième moyen de traitement comprend :

    un moyen (233) de calcul pour calculer des erreurs entre lesdites données d'image d'entrée et lesdites données d'image de sortie ;
    un moyen (234) de pondération pour pondérer des erreurs calculées par ledit moyen de calcul, d'une manière prédéterminée ; et
    un moyen (231) de compensation pour compenser les erreurs, en répartissant une erreur pondérée par ledit moyen de pondération sur des pixels voisins du pixel cible.

FIG. I

# FIG. 2

## FIG. 3

| INPUT | 0 | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|---|
| OUTPUT | 63 | 52 | 46 | 42 | 38 | 35 | 33 | 31 | 29 | 28 | 26 | 25 | 24 | 23 | 21 | 21 | 20 | 19 | 18 | 17 |

| INPUT | 20 | 21 | 22 | 23 | 24 | 25 | 26 | 27 | 28 | 29 | 30 | 31 | 32 | 33 | 34 | 35 | 36 | 37 | 38 | 39 |
|---|---|---|---|---|---|---|---|---|---|---|---|---|---|---|---|---|---|---|---|---|
| OUTPUT | 16 | 16 | 15 | 14 | 14 | 13 | 13 | 12 | 11 | 11 | 10 | 10 | 10 | 9 | 9 | 8 | 8 | 7 | 7 | 7 |

| INPUT | 40 | 41 | 42 | 43 | 44 | 45 | 46 | 47 | 48 | 49 | 50 | 51 | 52 | 53 | 54 | 55 | 56 | 57 | 58 | 59 |
|---|---|---|---|---|---|---|---|---|---|---|---|---|---|---|---|---|---|---|---|---|
| OUTPUT | 6 | 6 | 6 | 5 | 5 | 5 | 4 | 4 | 4 | 3 | 3 | 3 | 2 | 2 | 2 | 2 | 1 | 1 | 1 | 1 |

| INPUT | 60 | 61 | 62 | 63 |
|---|---|---|---|---|
| OUTPUT | 0 | 0 | 0 | 0 |

# FIG. 4

# FIG. 5

# FIG. 6

FIG. 7

## FIG. 8 (a)

| | $(X_1)$ | $P_1$ | | |
|---|---|---|---|---|
| $Q_1$ | $R_1$ | $S_1$ | | |

## FIG. 8 (b)

| | $(X_1)$ | $(X_2)$ $P_1$ | $P_2$ | |
|---|---|---|---|---|
| $Q_1$ | $R_1$ $Q_2$ | $S_1$ $R_2$ | $S_2$ | |

## FIG. 8 (c)

| | $(X_1)$ | $(X_2)$ $P_1$ | $(X_3)$ $P_2$ | $P_3$ |
|---|---|---|---|---|
| $Q_1$ | $R_1$ $Q_2$ | $S_1$ $R_2$ $Q_3$ | $S_2$ $R_3$ | $S_3$ |

FIG. 9

START

S1 — LETTER / PHOTO ?

PHOTO → USE MEMORY 208 FOR ERROR DIFFUSION PROCESSING — S6

LETTER → USE MEMORY 208 FOR NOTCH PROCESSING — S2

S7 — SEND / COPY ?

S3 — SEND / COPY ?

COPY

SEND

SEND

COPY

S9 — CONNECT ERROR DIFFUSION PROCESSING UNIT 206 TO PRINTER 210

S5 — CONNECT NOTCH PROCESSING UNIT 204 TO PRINTER 210

S8 — CONNECT ERROR DIFFUSION PROCESSING UNIT 206 TO CODING UNIT 214

S4 — CONNECT NOTCH PROCESSING UNIT 204 TO CODING UNIT 214

S10 — START KEY INPUT ?

N

Y

READ DOCUMENT — S11

S12 — FINISH READING ?

N

Y

END

# F I G. 10

EP 0 496 619 B1

FIG. II

# F I G. 12

OBJECT PIXEL

| * | 1 |
|---|---|
| 1 |   |